# EUROPÄISCHE PATENTSCHRIFT

(11) **EP 2 572 397 B1**
(45) Veröffentlichungstag und Bekanntmachung des Hinweises auf die Patenterteilung: **08.07.2015**
(21) Anmeldenummer: 11720455.2
(22) Anmeldetag: 17.05.2011
(51) Int. Cl.: H01M 4/58, H01M 10/052

(54) **VERBINDUNGEN UND IHRE VERWENDUNG ZUR HERSTELLUNG VON ELEKTROCHEMISCHEN ZELLEN**
COMPOUNDS AND THE USE THEREOF FOR PRODUCING ELECTROCHEMICAL CELLS
COMPOSÉS ET LEUR UTILISATION POUR PRODUIRE DES PILES ÉLECTROCHIMIQUES

(30) Priorität: 21.05.2010 EP 10163594
(43) Veröffentlichungstag der Anmeldung: 27.03.2013
(73) Patentinhaber: BASF SE, 67056 Ludwigshafen (DE)
(72) Erfinder: SCHULZ-DOBRICK, Martin, 68165 Mannheim (DE); HIBST, Hartmut, 69198 Schriesheim (DE); LAMPERT, Jordan Keith, 67063 Ludwigshafen (DE); GLAUM, Robert, 53359 Rheinbach-Flerzheim (DE); EHRENBERG, Helmut, 76334 Eggenstein-Leopoldshafen (DE); Gerber, Katharina, 53115 Bonn (DE); HERKLOTZ, Markus, 01099 Dresden (DE); SCHEIBA, Frieder, 01159 Dresden (DE)
(86) Internationale Anmeldenummer: PCT/EP2011/057958
(87) Internationale Veröffentlichungsnummer: WO 2011/144605

(56) Entgegenhaltungen:
- WO-A1-2010/023194
- T.R. JENSEN, R.G. HEZELL, A. NORLUND CHRISTENSEN, J.C. HANSON: "Hydrothermal synthesis of lithium zinc phosphates: Structural investigation of twinned alpha-Li4Zn(PO4)2 and a high temperature polymorph beta-Li4Zn(PO4)2.", JOURNAL OF SOLID STATE CHEMISTRY, Bd. 166, 2002, Seiten 341-351, XP000002658136,
- SHOJI YAMANAKA: "Ionic conductivity in anhydrous crystalline zirconium phosphates, Zr(MPO4)2 (M=Li, Na. K), with layered structures.", J. INORG. NUC. CHEM., Bd. 42, 1979, Seiten 717-720, XP000002658137,

## Beschreibung

Die vorliegende Erfindung betrifft Verbindungen der allgemeinen Formel (I)

AₐM_{b}P_{c}O_{d} (I)

in der die Variablen wie folgt definiert sind:
- M: ist mindestens ein Übergangsmetall, gewählt aus Co, Ni, Mn, Fe und Cr,
- A: ist Li oder LiₓNa₁₋ₓ, wobei x eine Zahl im Bereich von 0,2 bis 1,0 ist,
- a: ist eine Zahl im Bereich von 3,5 bis 4,5,
- b: ist eine Zahl im Bereich von 0,8 bis 1,2,
- c: ist eine Zahl im Bereich von 1,8 bis 2,2 und
- d: ist eine Zahl im Bereich von 7,2 bis 8,8.

Weiterhin betrifft die vorliegende Erfindung Elektroden, die mindestens ein erfindungsgemäßes Elektrodenmaterial enthalten. Weiterhin betrifft die vorliegende Erfindung elektrochemische Zellen, die mindestens eine erfindungsgemäße Elektrode enthalten. Weiterhin betrifft die vorliegende Erfindung Verbindungen, die sich zur Herstellung von elektrochemischen Zellen eignen.

Elektrochemische Zellen, die eine hohe Speicherkapazität bei möglichst hoher Arbeitsspannung aufweisen, sind von zunehmender Bedeutung. Die gewünschten Kapazitäten sind mit elektrochemischen Zellen, die auf Basis von wässrigen Systemen arbeiten, in der Regel nicht zu erreichen.

In Lithium-Ionen-Batterien wird der Ladungstransport nicht durch Protonen in mehr oder weniger stark hydratisierter Form gewährleistet, sondern durch Lithiumionen in einem nicht-wässrigen Lösungsmittel oder in einem nicht-wässrigen Lösungsmittelsystem. Eine besondere Rolle kommt dabei dem Elektrodenmaterial zu.

Viele aus der Literatur bekannte Elektrodenmaterialien sind Mischoxide von Lithium und einem oder mehreren Übergangsmetallen, siehe beispielsweise US 2003/0087154. Derartige Materialien neigen im geladenen Zustand der Batterie zur Zersetzung und zur Reaktion mit dem Elektrolytsystem, so dass die maximale Ladespannung in vielen Fällen begrenzt ist. Diese Begrenzung wirkt sich negativ auf die erreichbare Energiedichte der Batterie aus. Eine hohe Energiedichte der Batterie ist in der Regel vorteilhaft, insbesondere für mobile Anwendungen.

Weiterhin als Elektrodenmaterial bekannt sind Lithiummetallphosphate der allgemeinen Formel LiMetPO₄ (Met = Fe, Mn, Ni, Co), welche eine Olivinstruktur aufweisen, siehe beispielsweise EP 0 904 607. Derartige Lithiummetallphosphate weisen jedoch eine geringe Energiedichte auf.

Demgemäß wurden die eingangs definierten Verbindungen gefunden, die im Rahmen der vorliegenden Erfindung auch erfindungsgemäße Verbindungen oder erfindungsgemäße Verbindungen der allgemeinen Formel (I) genannt werden.

In erfindungsgemäßen Verbindungen der allgemeinen Formel (I)

AₐM_{b}P_{c}O_{d} (I)

sind die Variablen wie folgt definiert:
- M: ist mindestens ein Übergangsmetall, gewählt aus Co, Ni, Mn, Fe und Cr, bevorzugt ist Co.
- A: ist gewählt aus Li und LiₓNa₁₋ₓ, wobei x eine Zahl im Bereich von 0,2 bis 1,0 ist, beispielsweise 0,2 bis 0,99.
- a: ist eine Zahl im Bereich von 3,5 bis 4,5, bevorzugt 3,6 bis 4,1 und besonders bevorzugt 4,
- b: ist eine Zahl im Bereich von 0,8 bis 1,2, bevorzugt 0,9 bis 1,1 und besonders bevorzugt 1,0,
- c: ist eine Zahl im Bereich von 1,8 bis 2,2, bevorzugt 1,9 bis 2,1 und besonders bevorzugt 2,0,
- d: ist eine Zahl im Bereich von 7,2 bis 8,8, bevorzugt 7,6 bis 8,2 und besonders bevorzugt 8,0.

In einer bevorzugten Ausführungsform der vorliegenden Erfindung ist d viermal so groß wie c.

In einer Ausführungsform der vorliegenden Erfindung werden die Variablen a bis d wie folgt gewählt: a = 4, b = 1, c = 2 und d = 8.

Dabei kann M zu bis zu 20 mol-%, bevorzugt zu bis zu 10 mol-% durch Zn substituiert sein. In einer Ausführungsform der vorliegenden Erfindung ist M gewählt aus Co_{y}Zn_{1-y}, wobei y eine Zahl im Bereich von 0,75 bis 1,0 ist, beispielsweise bis 0,99.

In einer Ausführungsform der vorliegenden Erfindung ist P zu bis zu 10 mol-% durch B, Si oder As substituiert, bevorzugt durch Si oder B.

In einer Ausführungsform der vorliegenden Erfindung ist die formale Oxidationsstufe von M gleich +2.

In den Fällen, in denen P durch Si substituiert ist, kann die mittlere Oxidationsstufe von M größer sein als +2.

Die erfindungsgemäßen Verbindungen kristallisieren in der Regel nicht in der Olivinstruktur.

Erfindungsgemäße Verbindung der allgemeinen Formel (I) kann in verschiedenen Kristallmodifikationen vorliegen. Die Struktur des jeweiligen Kristallgitters lässt sich durch an sich bekannte Methoden, beispielsweise Röntgenbeugung oder Elektronenbeugung, bestimmen.

In einer Ausführungsform der vorliegenden Erfindung liegt erfindungsgemäße Verbindung der allgemeinen Formel (I) als amorphes Pulver vor. In einer anderen Ausführungsform der vorliegenden Erfindung liegt erfindungsgemäße Verbindung der allgemeinen Formel (I) als kristallines Pulver vor.

In einer Ausführungsform der vorliegenden Erfindung liegt erfindungsgemäße Verbindung der allgemeinen Formel (I) in Form von Partikeln mit einem mittleren Durchmesser (Zahlenmittel) im Bereich von 10 nm bis 200 µm vor, bevorzugt 20 nm bis 30 µm, gemessen durch Auswertung von durch Elektronenmikroskopie angefertigten Aufnahmen.

Erfindungsgemäße Verbindungen weisen eine hohe Energiedichte auf und eignen sich besonders gut zur Herstellung von erfindungsgemäßen Kompositen und zur Herstellung von erfindungsgemäßen Elektroden.

In einer Ausführungsform der vorliegenden Erfindung liegt erfindungsgemäße Verbindung der allgemeinen Formel (I) in erfindungsgemäßen Elektroden als Komposit mit elektrisch leitfähigem, kohlenstoffhaltigem Material (B) vor. Beispielsweise kann Verbindung der allgemeinen Formel (I) in erfindungsgemäßen Elektroden mit elektrisch leitfähigem, kohlenstoffhaltigem Material (B) behandelt sein, beispielsweise beschichtet. Derartige Komposite sind ebenfalls Gegenstand der vorliegenden Erfindung.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch als elektrisch leitfähiges, kohlenstoffhaltiges Material (B) oder kurz als Kohlenstoff (B) bezeichnet werden.

In einer Ausführungsform der vorliegenden Erfindung handelt es sich bei elektrisch leitfähigem, kohlenstoffhaltigem Material (B) um Ruß. Ruß kann beispielsweise gewählt werden aus Lampenruß, Ofenruß, Flammruß, Thermalruß, Acetylenruß, Industrieruß und Fumace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material (B) um partiell oxidierten Ruß.

In einer Ausführungsform der vorliegenden Erfindung handelt es sich bei elektrisch leitfähigem, kohlenstoffhaltigem Material (B) um Kohlenstoffnanoröhren (englisch carbon nanotubes). Kohlenstoffnanoröhren (Kohlenstoff-Nanoröhren, kurz CNT), beispielsweise einwandige Kohlenstoffnanoröhren (englisch single-walled carbon nanotubes, SW CNT) und bevorzugt mehrwandige Kohlenstoffnanoröhren (englisch multiwalled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 bis 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoff-Nanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von Verbindung der allgemeinen Formel (I) und Kohlenstoff (B) im Bereich von 200:1 bis 5:1, bevorzugt 100:1 bis 10:1.

Ein weiterer Aspekt der vorliegenden Erfindung ist eine Elektrode, enthaltend mindestens eine Verbindung der allgemeinen Formel (I), mindestens ein elektrisch leitfähiges, kohlenstoffhaltiges Material (B) und mindestens ein Bindemittel (C).

Verbindung der allgemeinen Formel (I) und elektrisch leitfähiges, kohlenstoffhaltiges Material (B) sind vorstehend beschrieben.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln (C)kann es sich um vernetzte oder unvernetzte (Co)polymere handeln.

In einer besonders bevorzugten Ausführungsform der vorliegenden Erfindung wählt man Bindemittel (C) aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel (C) sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

In einer Ausführungsform wählt man in erfindungsgemäßen Elektroden elektrisch leitfähiges, kohlenstoffhaltiges Material (B) aus Graphit, Ruß, Kohlenstoffnanoröhren, Graphen oder Mischungen von mindestens zwei der vorstehend genannten Stoffen.

In einer Ausführungsform der vorliegenden Erfindung enthält erfindungsgemäßes Elektrodenmaterial:
(A) im Bereich von 60 bis 98 Gew.-%, bevorzugt 70 bis 96 Gew.-% Verbindung der allgemeinen Formel (I),
(B) im Bereich von 1 bis 20 Gew.-%, bevorzugt 2 bis 15 Gew.-% Bindemittel,
(C) im Bereich von 1 bis 25 Gew.-% bevorzugt 2 bis 20 Gew.-% elektrisch leitfähiges, kohlenstoffhaltiges Material.

Die Geometrie von erfindungsgemäßen Elektroden kann man in weiten Grenzen wählen. Bevorzugt ist es, erfindungsgemäße Elektroden in dünnen Schichten auszugestalten, beispielsweise in Schichten mit einer Dicke im Bereich von 10 µm bis 250 µm, bevorzugt 20 bis 130 µm.

In einer Ausführungsform der vorliegenden Erfindung umfassen erfindungsgemäße Elektroden weiterhin eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemäßen Elektrodenmaterialien bzw. erfindungsgemäßen Elektroden in elektrochemischen Zellen. Ein weiterer Gegenstand der vorliegenden Erfindung ist ein Verfahren zur Herstellung von elektrochemischen Zellen unter Verwendung von erfindungsgemäßem Elektrodenmaterial bzw. von erfindungsgemäßen Elektroden. Ein weiterer Gegenstand der vorliegenden Erfindung sind elektrochemische Zellen, enthaltend mindestens ein erfindungsgemäßes Elektrodenmaterial oder mindestens eine erfindungsgemäße Elektrode.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III) 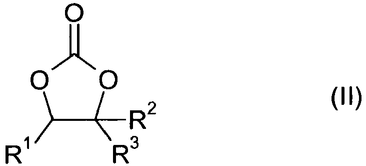 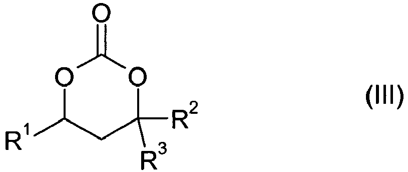 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, isoButyl, sec.-Butyl und tert.-Butyl, wobei vorzugsweise R² und R³ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (IV).

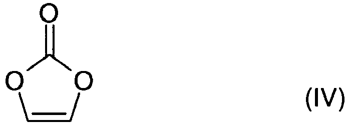

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₘXLi, wobei m wie folgt definiert ist:
m = 1, wenn X gewählt wird aus Sauerstoff und Schwefel,
m = 2, wenn X gewählt wird aus Stickstoff und Phosphor, und
m = 3, wenn X gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine hohe Energiedichte und gute Stabilität aus.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemäßen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Ein weiterer Gegenstand der vorliegenden Erfindung ist ein Verfahren zur Herstellung von Elektroden, dadurch gekennzeichnet, dass man
(A) mindestens eine Verbindung der allgemeinen Formel (I)

   AₐM_{b}P_{c}O_{d} (I)

   in der die Variablen wie folgt definiert sind:
   - M: ist mindestens ein Übergangsmetall, gewählt aus Co, Ni, Mn, Fe und Cr,
   - A: ist Li oder LiₓNa₁₋ₓ, wobei x eine Zahl im Bereich von 0,2 bis 1,0 ist,
   - a: ist eine Zahl im Bereich von 3,5 bis 4,5,
   - b: ist eine Zahl im Bereich von 0,8 bis 1,2,
   - c: ist eine Zahl im Bereich von 1,8 bis 2,2 und
   - d: ist eine Zahl im Bereich von 7,2 bis 8,8;
(B) mindestens ein elektrisch leitfähiges, kohlenstoffhaltiges Material und
(C) mindestens ein Bindemittel
   in einem oder mehreren Schritten miteinander vermischt und gegebenenfalls auf
(D) mindestens einer Metall- oder Kunststofffolie
   aufbringt.

Verbindung der allgemeinen Formel (I), elektrisch leitfähiges, kohlenstoffhaltiges Material bzw. Kohlenstoff (B) und Bindemittel (C) sind vorstehend definiert.

Das Vermischen kann in einem oder mehreren Schritten erfolgen.

In einer Variante des erfindungsgemäßen Verfahrens vermischt man Verbindung der allgemeinen Formel (I), Kohlenstoff (B) und Bindemittel (C) in einem Schritt, beispielsweise in einer Mühle, insbesondere in einer Kugelmühle. Anschließend bringt man die so erhältliche Mischung in einer dünnen Schicht auf einen Träger auf, beispielsweise eine Metall- oder Kunststofffolie (D). Vor oder bei dem Einbau in eine elektrochemische Zelle kann man den Träger entfernen. In anderen Varianten behält man den Träger.

In einer anderen Variante des erfindungsgemäßen Verfahrens vermischt man Verbindung der allgemeinen Formel (I), Kohlenstoff (B) und Bindemittel (C) in mehreren Schritten, beispielsweise in einer Mühle, insbesondere in einer Kugelmühle. So kann man beispielsweise zunächst Verbindung der allgemeinen Formel (I) und Kohlenstoff (B) miteinander vermischen. Danach vermischt man mit Bindemittel (C). Anschließend bringt man die so erhältliche Mischung in einer dünnen Schicht auf einen Träger auf, beispielsweise eine Metall- oder Kunststofffolie (D). Vor oder bei dem Einbau in eine elektrochemische Zelle kann man den Träger entfernen. In anderen Varianten entfernt man den Träger nicht.

In einer Variante des erfindungsgemäßen Verfahrens vermischt man Verbindung der allgemeinen Formel (I), Kohlenstoff (B) und Bindemittel (C) in Wasser oder einem organischen Lösungsmittel (z.B. N-Methylpyrrolidon oder Aceton). Die so erhältliche Suspension wird in einer dünnen Schicht auf einen Träger auf, beispielsweise eine Metall- oder Kunststofffolie (D) aufgebracht und das Lösungsmittel wird anschließend durch eine Wärmebehandlung entfernt. Vor oder bei dem Einbau in eine elektrochemische Zelle kann man den Träger entfernen. In anderen Varianten entfernt man den Träger nicht.

Dünne Schichten im Sinne der vorliegenden Erfindung können beispielsweise eine Dicke im Bereich von 2 µm bis zu 250 µm aufweisen.

Zur Verbesserung der mechanischen Stabilität kann man die Elektroden thermisch oder vorzugsweise mechanisch behandeln, beispielsweise verpressen oder kalandrieren.

In einer Ausführungsform der vorliegenden Erfindung erzeugt man eine kohlenstoffhaltige, leitfähige Schicht dadurch, dass man ein Gemisch, enthaltend mindestens eine Verbindung der allgemeinen Formel (I) und mindestens eine kohlenstoffhaltige, thermisch zersetzbare Verbindung erzeugt wird und dieses Gemisch einer thermischen Zersetzung unterworfen wird.

In einer Ausführungsform der vorliegenden Erfindung erzeugt man eine kohlenstoffhaltige, leitfähige Schicht dadurch, dass während der Synthese der Verbindung der allgemeinen Formel (I) mindestens eine kohlenstoffhaltige, thermisch zersetzbare Verbindung zugegen ist, welche durch Zersetzung eine kohlenstoffhaltige, leitfähige Schicht auf der Verbindung der allgemeinen Formel (I) bildet.

Das erfindungsgemäße Verfahren eignet sich gut zur Herstellung von erfindungsgemäßem Elektrodenmaterial und daraus erhältlichen Elektroden.

Ein weiterer Gegenstand der vorliegenden Erfindung sind Komposite, enthaltend mindestens eine Verbindung der allgemeinen Formel (I)

AₐM_{b}P_{c}O_{d} (I)

in der die Variablen wie folgt definiert sind:
- M: ist mindestens ein Übergangsmetall, gewählt aus Co, Ni, Mn, Fe und Cr,
- A: ist Li oder LiₓNa₁₋ₓ, wobei x eine Zahl im Bereich von 0,2 bis 1,0 ist,
- a: ist eine Zahl im Bereich von 3,5 bis 4,5,
- b: ist eine Zahl im Bereich von 0,8 bis 1,2,
- c: ist eine Zahl im Bereich von 1,8 bis 2,2,
- d: ist eine Zahl im Bereich von 7,2 bis 8,8,
und
mindestens ein elektrisch leitfähiges, kohlenstoffhaltiges Material, auch Kohlenstoff (B) genannt.

In erfindungsgemäßen Kompositen ist Verbindung der allgemeinen Formel (I) mit Kohlenstoff (B) behandelt, beispielsweise beschichtet.

In einer Ausführungsform der vorliegenden Erfindung liegt in erfindungsgemäßen Kompositen Verbindung der allgemeinen Formel (I) und Kohlenstoff (B) in einem Gewichtsverhältnis im Bereich von 98 : 1 bis 12 :5 vor, bevorzugt sind 48 : 1 bis 7 : 2.

Erfindungsgemäße Komposite sind besonders geeignet zur Herstellung von erfindungsgemäßem Elektrodenmaterial. Ein Verfahren zu ihrer Herstellung ist vorstehend beschrieben und ebenfalls Gegenstand der vorliegenden Erfindung.

Ein weiterer Gegenstand der vorliegenden Erfindung ist ein Verfahren zur Herstellung von erfindungsgemäßen Verbindungen der allgemeinen Formel (I), auch erfindungsgemäßes Syntheseverfahren genannt. Das erfindungsgemäße Syntheseverfahren kann man so durchführen, dass man mindestens ein Phosphat, Carbonat oder Oxid von Metall M und Li und gegebenenfalls weitere Verbindungen, beispielsweise Ammoniumhydrogenphosphat, insbesondere (NH₄)H₂PO₄ oder (NH₄)₂HPO₄, miteinander auf Temperaturen oberhalb von 700°C, beispielsweise bei Temperaturen im Bereich von 800 bis 1000°C, bevorzugt bis 950°C, miteinander erhitzt. Das Erhitzen kann ohne Lösungsmittel erfolgen, beispielsweise in Tiegeln, Ampullen, Druckkesseln, Autoklaven oder in Drehrohröfen.

In einer anderen Ausführungsform des erfindungsgemäßen Syntheseverfahrens vermischt man vor dem eigentlichen Erhitzen mindestens ein Phosphat, Carbonat oder Oxid von Metall M und Li und gegebenenfalls weitere Verbindungen, beispielsweise Ammoniumhydrogenphosphat, insbesondere (NH₄)H₂PO₄ oder (NH₄)₂HPO₄, miteinander in einem Lösungsmittel oder Lösungsmittelgemisch und erhitzt auf Temperaturen im Bereich von 150 bis 350°C. Danach erhitzt man Lösungsmittel-frei auf Temperaturen oberhalb von 700°C, beispielsweise bei Temperaturen im Bereich von 800 bis 1000°C, bevorzugt bis 950°C. Als Lösungsmittel kommen bevorzugt solche mit einem Siedepunkt von mindestens 150°C in Frage, beispielsweise Ethylenglykol, Diethylenglykol, Triethylenglykol oder Dimethylsulfoxid (DMSO).

In einer speziellen Variante des erfindungsgemäßen Syntheseverfahrens vermischt man vor dem eigentlichen Erhitzen mindestens ein Phosphat, Carbonat oder Oxid von Metall M und Li und gegebenenfalls weitere Verbindungen, beispielsweise Ammoniumhydrogenphosphat, insbesondere (NH₄)H₂PO₄ oder (NH₄)₂HPO₄, miteinander in einem Lösungsmittel oder Lösungsmittelgemisch und zusätzliche in Gegenwart von einer Di-, Tri- oder Polycarbonsäure, beispielsweise Adipinsäure oder insbesondere Citronensäure.

Das erfindungsgemäße Syntheseverfahren kann man unter Schutzgas durchführen oder an der Luft.

Das erfindungsgemäße Syntheseverfahren kann man bei Normaldruck ausüben. In einer anderen Ausführungsform der vorliegenden Erfindung kann man das erfindungsgemäße Syntheseverfahren bei Drucken im Bereich von 1,1 bis 25 bar durchführen. In einer anderen Ausführungsform der vorliegenden Erfindung kann man das erfindungsgemäße Syntheseverfahren unter vermindertem Druck durchführen, beispielsweise bei einem Druck im Bereich von 1 mbar bis 500 mbar.

Das Erhitzen im Rahmen des erfindungsgemäßen Syntheseverfahrens kann man über einen Zeitraum von insgesamt einer bis 100 Stunden durchführen, bevorzugt sind eine Stunde bis 24 Stunden.

Nach dem Erhitzen kühlt man vorzugsweise wieder ab. Dabei ist es bevorzugt, schnell abzukühlen, beispielsweise innerhalb von 10 Minuten von 700 bis 1000°C auf 50 bis 70°C abzukühlen. Je schneller man abkühlt, desto reiner sind erfindungsgemäße Verbindungen.

Die Erfindung wird durch Arbeitsbeispiele erläutert.

### Eingesetzte Materialien:

Elektrisch leitfähige, kohlenstoffhaltige Materialien:
Kohlenstoff (B.1): Ruß, BET-Oberfläche von 62 m²/g, kommerziell erhältlich als "Super P Li" der Firma Timcal

Bindemittel (C.1): Polyvinylidenfluorid, als Granulat, kommerziell erhältlich als Solef® PVDF 1013 der Fa. Solvay.
I. Herstellung von erfindungsgemäßen Verbindungen
I.1 Herstellung von erfindungsgemäßer Verbindung (I.1)

Die Darstellung von Li₄Co(PO₄)₂ erfolgte ausgehend von CoCO₃, Li₂CO₃ und (NH₄)₂HPO₄ als Edukten. Die Edukte wurden im molaren Verhältnis 1 : 2 : 2 in einem Achat-Mörser miteinander verrieben. Das so erhaltene Pulver wurde in einem Aluminiumoxidtiegel eingebracht und an Luft für 2 h bei 400°C getempert (Aufheizgeschwindigkeit 150 K/h). Das entstandene Material wurde in einem Achat-Mörser verrieben und aus dem Pulver wurden scheibenförmige Presslinge angefertigt (1 g Material pro Pressling) angefertigt. Die Presslinge wurden in einen Aluminiumoxidtiegel eingebracht und an Luft für 12 h bei 900°C getempert (Aufheizgeschwindigkeit 150 K/h). Anschließend wurde der Aluminiumoxidtiegel aus dem 900°C heißen Ofen entnommen und innerhalb weniger Minuten auf Raumtemperatur abgekühlt. Die Presslinge wurden zerkleinert. Das so erhaltene Pulver war tiefblau. Mittels eines Röntgendiffraktogramms (Cu-Kα1-Strahlung) des Pulvers konnte erfindungsgemäße Verbindung (I.1) als Li₄Co(PO₄)₂ identifiziert werden.

### I.2 Herstellung von erfindungsgemäßer Verbindung (I.2)

Die Darstellung von Li₄Co(PO₄)₂ erfolgte ausgehend von CoO und Li₄P₂O₇ als Edukte. Die Edukte wurden im molaren Verhältnis 1 : 1 in einem Achat-Mörser miteinander verrieben. Aus dem so erhaltenen Pulver fertigte man einen stäbchenförmigen Pressling an, den man in eine evakuierte Kieselglasampulle (15 cm³) einschmolz und in einen Einzonenofen eingebrachte. Man temperte 72 h bei 850°C und entnahm danach die Kieselglasampulle dem Ofen und kühlte innerhalb weniger Minuten auf Zimmertemperatur ab. Der Pressling wurde zerkleinert. Das so erhaltene Pulver war tiefblau. Mittels eines Röntgendiffraktogramms (Cu-Kα1-Strahlung) des Pulvers konnte erfindungsgemäße Verbindung (I.2) als Li₄Co(PO₄)₂ identifiziert werden.

### I.3 Herstellung von erfindungsgemäßer Verbindung (I.2), verunreinigt mit LiCoPO₄

Eine alternative Darstellung von Li₄Co(PO₄)₂ erfolgte ausgehend von CoO und Li₄P₂O₇ als Edukten. Die Edukte wurden in einem Gemisch aus Ethylenglykol und Citronensäure (40:60 Gewichtsanteile) suspendiert. Die so erhaltene Suspension wurde anschließend auf 250°C erhitzt, bis sich ein brauner, karamellartiger Rückstand gebildet hatte. Dieser wurde in einem Achatmörser verrieben und dann in einer einseitig offenen Kieselglasampulle an Luft für 24 h bei 350°C und anschließend für 72 h bei 850°C getempert. Dann wurde die Ampulle aus dem Ofen entnommen und innerhalb von wenigen Minuten auf Zimmertemperatur abgekühlt. Das in der Ampulle befindliche Pulver war tiefblau. Mittels eines Röntgendiffraktogramms (Cu-Kα1-Strahlung) des Pulvers konnte Li₄Co(PO₄)₂ als Hauptphase und LiCoPO₄ als Nebenphase (ca. 5%) identifiziert werden.

### I.4 Herstellung von erfindungsgemäßer Verbindung (I.3)

Die Darstellung von Li₄Co_{0.8}Zn_{0.2}(PO₄)₂ erfolgte ausgehend von CoCO₃, ZnO, Li₂CO₃ und (NH₄)₂HPO₄ als Edukten. Die Edukte wurden im molaren Verhältnis 0,8 : 0,2 : 2 : 2 in einem Achat-Mörser miteinander verrieben. Das so erhaltene Pulver wurde in einen Aluminiumoxidtiegel eingebracht und an Luft für 2 h bei 400°C getempert (Aufheizgeschwindigkeit 150 K/h). Man verrieb das entstandene Material in einem Achat-Mörser und fertigte aus dem so erhaltenen Pulver scheibenförmige Presslinge an (1 g Material pro Pressling). Die Presslinge wurden in einen Aluminiumoxidtiegel eingebracht und an Luft für 12 h bei 900°C getempert (Aufheizgeschwindigkeit 150 K/h). Anschließend wurde der Aluminiumoxidtiegel aus dem 900°C heißen Ofen entnommen und die Presslinge innerhalb weniger Minuten auf Raumtemperatur abgekühlt. Die Presslinge wurden zerkleinert. Das so erhaltene Pulver war tiefblau. Mittels eines Röntgendiffraktogramms (Cu-Kα1-Strahlung) des Pulvers konnte erfindungsgemäße Verbindung (I.3) als Li₄Co_{0.8}Zn_{0.2}(PO₄)₂ identifiziert werden.

### 1.5 Herstellung von erfindungsgemäßer Verbindung (I.4)

Die Darstellung von Li_{3.6}Na_{0.4}Co(PO₄)₂ erfolgte ausgehend von CoCO₃, Li₂CO₃, Na₂CO₃ und (NH₄)₂HPO₄ als Edukten. Die Edukte wurden im molaren Verhältnis 1 : 1,8 : 0,2 : 2 in einem Achat-Mörser miteinander verrieben. Das so erhaltene Pulver wurde in einem Aluminiumoxidtiegel eingebracht und an Luft für 2 h bei 400°C getempert (Aufheizgeschwindigkeit 150 K/h). Man verrieb das so entstandene Material in einem Achat-Mörser und fertigte aus dem erhaltenen Pulver scheibenförmige Presslinge an (1 g Material pro Pressling). Die Presslinge wurden in einen Aluminiumoxidtiegel eingebracht und an Luft für 12 h bei 900°C getempert (Aufheizgeschwindigkeit 150 K/h). Anschließend wurde der Tiegel dem 900°C heißen Ofen entnommen und die Presslinge innerhalb weniger Minuten auf Raumtemperatur abgekühlt. Die Presslinge wurden zerkleinert. Das so erhaltene Pulver war tiefblau. Mittels eines Röntgendiffraktogramms (Cu-Kα1-Strahlung) des Pulvers konnte erfindungsgemäße Verbindung (I.4) als Li_{3.6}Na_{0.4}Co(PO₄)₂ identifiziert werden.

### I.6 Herstellung von erfindungsgemäßer Verbindung (I.5)

Die Darstellung von LiNa₃Co(PO₄)₂ erfolgte ausgehend von CoCO₃, Li₂CO₃, Na₂CO₃ und (NH₄)₂HPO₄ als Edukten. Die Edukte wurden im molaren Verhältnis 1 : 0,5 : 1,5 : 2 in einem Achat-Mörser miteinander verrieben. Das so erhaltene Pulver wurde in einem Aluminiumoxidtiegel eingebracht und an Luft für 2 h bei 400°C getempert (Aufheizgeschwindigkeit 150 K/h). Man verrieb das so entstandene Material in einem Achat-Mörser und fertigte aus dem erhaltenen Pulver scheibenförmige Presslinge an (1 g Material pro Pressling). Die Presslinge wurden in einen Aluminiumoxidtiegel eingebracht und an Luft für 12 h bei 600°C getempert (Aufheizgeschwindigkeit 150 K/h). Anschließend wurde der Tiegel dem 600°C heißen Ofen entnommen und die Presslinge innerhalb weniger Minuten auf Raumtemperatur abgekühlt. Die Presslinge wurden zerkleinert. Das so erhaltene Pulver war leuchtend blau. Mittels eines Röntgendiffraktogramms des Pulvers (Cu-Kα1-Strahlung) konnte erfindungsgemäße Verbindung (I.5) als LiNa₃Co(PO₄)₂ identifiziert werden.
II. Herstellung von erfindungsgemäßen elektrochemischen Zellen am Beispiel von Li₄Co(PO₄)₂ aus Beispiel I.1
II.1 Herstellung einer erfindungsgemäßen Kathode (Elektrode)

Die gesamte im Folgenden beschriebene Elektrodenherstellung wurde in einer Inter-Gas Glovebox unter Argon als Schutzgas und unter Ausschluss von Wasser und Sauerstoff durchgeführt.

48 mg des Pulvers von Li₄Co(PO₄)₂ aus Beispiel I.1 wurden mit 6 mg (B.1) und mit 6 mg (C.1) in einem Achatmörser vermischt und 10 min mit einem Pistill verrieben. Man erhielt ein Gemisch. Zur Herstellung der Elektrode wurde das Gemisch auf Aluminiumnetze (nominale Öffnung: 0,11 mm, Drahtdurchmesser: 0,1 mm) gepresst (Anpressdruck = 5 t). Die so erhaltenen Elektroden wurden daraufhin über einem Zeitraum von 24 Stunden bei 95°C im Vakuumtrockenschrank gelagert. Man erhielt erfindungsgemäße Elektroden.

### II.2 Herstellung einer erfindungsgemäßen elektrochemischen Zelle

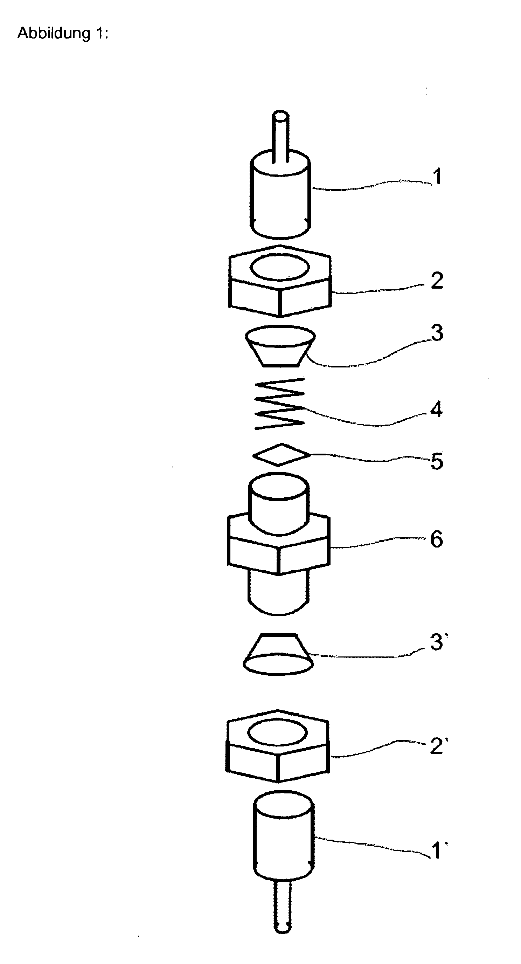

Beim Zusammenbau der erfindungsgemäßen elektrochemischen Zelle wurde diese von unten nach oben gemäß der schematischen Abbildung 1 zusammengesetzt. In Abbildung 1 befindet sich die Anodenseite oben, die Kathodenseite unten.

Die Erläuterungen bedeuten:
- 1, 1': Stempel
- 2, 2': Mutter
- 3, 3': Dichtungsring - jeweils doppelt, der jeweils zweite, etwas kleinere Dichtungsring ist hier nicht gezeigt
- 4: Spiralfeder
- 5: Stromableiter aus Nickel
- 6: Gehäuse

Auf den Stempel der Kathodenseite, 1', wurde das auf das Aluminiumnetz gepresste und getrocknete Kathodenmaterial aufgebracht. Anschließend wurden zwei Separatoren aus Glasfaser (Dicke 0,5 mm) auf das Aluminiumnetz gelegt. Auf die Separatoren wurde der Elektrolyt gegeben, der aus 1 M LiPF₆, gelöst in Ethylencarbonat und Dimethylcarbonat im Massenverhältnis 1:1 bestand. Als Anode diente eine Folie von elementarem Lithium (Dicke 0,5 mm), welches auf die getränkten Separatoren gelegt wurde. Als Stromableiter wurde ein Nickelplättchen genutzt, welches direkt auf das Lithium aufgebracht wurde. Anschließend wurde zugeschraubt. Mittels einer Stahlfeder und durch den Druck, welcher durch die Verschraubung des Anodenstempels erzeugt wurde, wurde der elektrische Kontakt gewährleistet.

Man erhielt erfindungsgemäße elektrochemische Zellen EZ.1.

### 11.3 Charakterisierung von erfindungsgemäßen elektrochemischen Zellen EZ.1

Die elektrochemischen Charakterisierungen wurden mit einem VMP3 Potentiostaten der Firma Bio-Logic SAS, Claix, Frankreich durchgeführt. Die erfindungsgemäßen elektrochemischen Zellen EZ.1 wurden in einem Klimaschrank auf 25°C temperiert.

Als elektrochemische Charakterisierungsmethode wurde ein als PITT (englisch: potentiostatic intermittent titration technique) bezeichnetes Verfahren eingesetzt. Bei diesem Verfahren wird die Spannung nicht in festen Zeitschritten erhöht, sondern die Zeit pro Potentialschritt wird über einen Grenzstrom I_{Lim} definiert. Fällt der Strom unter I_{Lim}, wird das Potential um ΔE erhöht. Bei der Wahl eines hinreichend kleinen Grenzstromes erlaubt dieses Messprinzip, im Gegensatz zur Zyklovoltammetrie, eine genauere Bestimmung der Redoxpotentiale von Elektrodenprozessen mit langsamer Kinetik. Die Betrachtung der pro Potentialschritt geflossenen Ladungsmenge dq zeigt durch Maxima die Potentiale, bei denen die Oxidations- bzw. Reduktionsprozesse stattfinden. Der erste Lade- und Entladeprozess von jeweils zwei erfindungsgemäßen Zellen EZ.1 wurde untersucht. Das angelegte Potential gegenüber Lithium wurde zwischen 3.0 V und 5.2 V variiert. I_{Lim} wurde auf 5,25 µA festgesetzt.

Für EZ.1 wurde sowohl im Lade- als auch im Entladezyklus eine elektrochemische Aktivität im Bereich zwischen 4,5 V und 5,0 V beobachtet.

## Patentansprüche

1. Verbindung der allgemeinen Formel (I)
AₐM_{b}P_{c}O_{d} (I)
in der die Variablen wie folgt definiert sind:
M ist mindestens ein Übergangsmetall, gewählt aus Co, Ni, Mn, Fe und Cr,
A ist Li oder LiₓNa₁₋ₓ, wobei x eine Zahl im Bereich von 0,2 bis 1,0 ist,
a ist eine Zahl im Bereich von 3,5 bis 4,5,
b ist eine Zahl im Bereich von 0,8 bis 1,2,
c ist eine Zahl im Bereich von 1,8 bis 2,2 und
d ist eine Zahl im Bereich von 7,2 bis 8,8.

2. Verbindung nach Anspruch 1, **dadurch gekennzeichnet, dass** A zu bis zu 10 mol-% durch K, Be, Mg oder Ca substituiert ist.

3. Verbindung nach Anspruch 1 oder 2, **dadurch gekennzeichnet, dass** die Variablen wie folgt gewählt werden: a = 4, b = 1, c = 2 und d = 8.

4. Verbindung nach einem der Ansprüche 1 bis 3, **dadurch gekennzeichnet, dass** M zu bis zu 20 mol-% durch Zn substituiert ist.

5. Verbindung nach einem der Ansprüche 1 bis 4, **dadurch gekennzeichnet, dass** M gewählt wird aus Co_{y}Zn_{1-y}, wobei y eine Zahl im Bereich von 0,75 bis 1,0 ist.

6. Verbindung nach einem der Ansprüche 1 bis 5, **dadurch gekennzeichnet, dass** P zu bis zu 10 mol-% durch B, Si oder As substituiert ist.

7. Elektrode, enthaltend mindestens eine Verbindung nach einem der Ansprüche 1 bis 6, mindestens ein elektrisch leitfähiges, kohlenstoffhaltiges Material und mindestens ein Bindemittel.

8. Elektrode nach Anspruch 7, **dadurch gekennzeichnet, dass** man elektrisch leitfähiges, kohlenstoffhaltiges Material wählt aus Graphit, Ruß, Kohlenstoffnanoröhren, Graphen oder Mischungen von mindestens zwei der vorstehend genannten Stoffen.

9. Verwendung von Verbindungen nach einem der Ansprüche 1 bis 6 oder von Elektroden nach Anspruch 7 oder 8 in elektrochemischen Zellen.

10. Verfahren zur Herstellung von elektrochemischen Zellen unter Verwendung von mindestens einer Verbindung nach einem der Ansprüche 1 bis 6 oder von Elektroden nach Anspruch 7 oder 8.

11. Verfahren zur Herstellung von Elektroden unter Verwendung von mindestens einer Verbindung nach einem der Ansprüche 1 bis 6 oder von Elektroden nach Anspruch 7 oder 8.

12. Elektrochemische Zelle, enthaltend mindestens eine Verbindung nach einem der Ansprüche 1 bis 6 oder von Elektroden nach Anspruch 7 oder 8.

13. Verwendung von elektrochemischen Zellen nach Anspruch 12 als Stromquelle in mobilen Geräten.

14. Verwendung von elektrochemischen Zellen nach Anspruch 12 oder 13, **dadurch gekennzeichnet, dass** das mobile Gerät ein Automobil, ein Zweirad, ein Flugzeug, ein Computer, ein Telefon oder ein elektrisches Handwerkzeug ist.

15. Verfahren zur Herstellung von Elektroden, **dadurch gekennzeichnet, dass** man
(A) mindestens eine Verbindung der allgemeinen Formel (I)
AₐM_{b}P_{c}O_{d} (I)
in der die Variablen wie folgt definiert sind:
M ist mindestens ein Übergangsmetall, gewählt aus Co, Ni, Mn, Fe und Cr,
A ist Li oder LiₓNa₁₋ₓ, wobei x eine Zahl im Bereich von 0,2 bis 1,0 ist,
a ist eine Zahl im Bereich von 3,5 bis 4,5,
b ist eine Zahl im Bereich von 0,8 bis 1,2,
c ist eine Zahl im Bereich von 1,8 bis 2,2 und
d ist eine Zahl im Bereich von 7,2 bis 8,8 ist,
(B) mindestens ein elektrisch leitfähiges, kohlenstoffhaltiges Material und
(C) mindestens ein Bindemittel
in einem oder mehreren Schritten miteinander vermischt und gegebenenfalls auf
(D) mindestens einer Metall- oder Kunststofffolie aufbringt.

16. Komposit, enthaltend
(A) mindestens eine Verbindung der allgemeinen Formel (I)
AₐM_{b}P_{c}O_{d} (I)
in der die Variablen wie folgt definiert sind:
M ist mindestens ein Übergangsmetall, gewählt aus Co, Ni, Mn, Fe und Cr,
A ist Li oder LiₓNa₁₋ₓ, wobei x eine Zahl im Bereich von 0,2 bis 1,0 ist,
a ist eine Zahl im Bereich von 3,5 bis 4,5,
b ist eine Zahl im Bereich von 0,8 bis 1,2,
c ist eine Zahl im Bereich von 1,8 bis 2,2 und
d ist eine Zahl im Bereich von 7,2 bis 8,8 ist, und
(B) mindestens ein elektrisch leitfähiges, kohlenstoffhaltiges Material.

## Claims

1. A compound of the general formula (I)
AₐM_{b}P_{c}O_{d} (I)
in which the variables are each defined as follows:
M is at least one transition metal selected from Co, Ni, Mn, Fe and Cr,
A is Li or LiₓNa₁₋ₓ where x is in the range from 0.2 to 1.0,
a is in the range from 3.5 to 4.5,
b is in the range from 0.8 to 1.2,
c is in the range from 1.8 to 2.2 and
d is in the range from 7.2 to 8.8.

2. A compound according to claim 1, wherein A is replaced to an extent of up to 10 mol% by K, Be, Mg or Ca.

3. A compound according to claim 1 or 2, wherein the variables are each selected as follows: a = 4, b = 1, c = 2 and d = 8.

4. A compound according to any of claims 1 to 3, wherein M is replaced to an extent of up to 20 mol% by Zn.

5. A compound according to any of claims 1 to 4, wherein M is selected from Co_{y}Zn_{1-y} where y is in the range from 0.75 to 1.0.

6. A compound according to any of claims 1 to 5, wherein P is replaced to an extent of up to 10 mol% by B, Si or As.

7. An electrode comprising at least one compound according to any of claims 1 to 6, at least one electrically conductive, carbonaceous material and at least one binder.

8. The electrode according to claim 7, wherein electrically conductive, carbonaceous material is selected from graphite, carbon black, carbon nanotubes, graphene or mixtures of at least two of the aforementioned substances.

9. The use of compounds according to any of claims 1 to 6 or of electrodes according to claim 7 or 8 in electrochemical cells.

10. A process for producing electrochemical cells using at least one compound according to any of claims 1 to 6 or electrodes according to claim 7 or 8.

11. A process for producing electrodes using at least one compound according to any of claims 1 to 6 or electrodes according to claim 7 or 8.

12. An electrochemical cell comprising at least one compound according to any of claims 1 to 6 or electrodes according to claim 7 or 8.

13. The use of electrochemical cells according to claim 12 as a power source in mobile units.

14. The use of electrochemical cells according to claim 12 or 13, wherein the mobile unit is an automobile, a bicycle, an aircraft, a computer, a telephone or a power tool.

15. A process for producing electrodes, which comprises
(A) mixing at least one compound of the general formula (I)
AₐM_{b}P_{c}O_{d} (I)
in which the variables are each defined as follows:
M is at least one transition metal selected from Co, Ni, Mn, Fe and Cr,
A is Li or LiₓNa₁₋ₓ where x is in the range from 0.2 to 1.0,
a is in the range from 3.5 to 4.5,
b is in the range from 0.8 to 1.2,
c is in the range from 1.8 to 2.2 and
d is in the range from 7.2 to 8.8,
(B) at least one electrically conductive, carbonaceous material and
(C) at least one binder
with one another in one or more steps, and optionally applying them to
(D) at least one metal foil or polymer film.

16. A composite comprising
(A) at least one compound of the general formula (I)
AₐM_{b}P_{c}O_{d} (I)
in which the variables are each defined as follows:
M is at least one transition metal selected from Co, Ni, Mn, F and Cr,
A is Li or LiₓNa₁₋ₓ where x is in the range from 0.2 to 1.0,
a is in the range from 3.5 to 4.5,
b is in the range from 0.8 to 1.2,
c is in the range from 1.8 to 2.2 and
d is in the range from 7.2 to 8.8, and
(B) at least one electrically conductive, carbonaceous material.

## Revendications

1. Composé de formule générale (I)
AₐM_{b}P_{c}O_{d} (I)
dans laquelle les variables sont définies de la manière suivante :
M représente au moins un métal de transition, choisi parmi Co, Ni, Mn, Fe et Cr,
A représente Li ou LiₓNa₁₋ₓ, x étant un nombre dans la plage allant de 0,2 à 1,0,
a représente un nombre dans la plage allant de 3,5 à 4,5,
b représente un nombre dans la plage allant de 0,8 à 1, 2,
c représente un nombre dans la plage allant de 1,8 à 2,2, et
d représente un nombre dans la plage allant de 7,2 à 8, 8.

2. Composé selon la revendication 1, **caractérisé en ce que** A est substitué à hauteur de jusqu'à 10 % en moles par K, Be, Mg ou Ca.

3. Composé selon la revendication 1 ou 2, **caractérisé en ce que** les variables sont choisies de la manière suivante : a = 4, b = 1, c = 2 et d = 8.

4. Composé selon l'une quelconque des revendications 1 à 3, **caractérisé en ce que** M est substitué à hauteur de jusqu'à 20 % en moles par Zn.

5. Composé selon l'une quelconque des revendications 1 à 4, **caractérisé en ce que** M est choisi parmi Co_{y}Zn_{1-y}, y étant un nombre dans la plage allant de 0,75 à 1,0.

6. Composé selon l'une quelconque des revendications 1 à 5, **caractérisé en ce que** P est substitué à hauteur de jusqu'à 10 % en moles par B, Si ou As.

7. Électrode, contenant au moins un composé selon l'une quelconque des revendications 1 à 6, au moins un matériau carboné électriquement conducteur et au moins un liant.

8. Électrode selon la revendication 7, **caractérisée en ce que** le matériau carboné électriquement conducteur est choisi parmi le graphite, le noir de carbone, les nanotubes de carbone, le graphène ou les mélanges d'au moins deux des matières susmentionnées.

9. Utilisation de composés selon l'une quelconque des revendications 1 à 6 ou d'électrodes selon la revendication 7 ou 8 dans des piles électrochimiques.

10. Procédé de fabrication de piles électrochimiques utilisant au moins un composé selon l'une quelconque des revendications 1 à 6 ou des électrodes selon la revendication 7 ou 8.

11. Procédé de fabrication d'électrodes utilisant au moins un composé selon l'une quelconque des revendications 1 à 6 ou des électrodes selon la revendication 7 ou 8.

12. Piles électrochimiques, contenant au moins un composé selon l'une quelconque des revendications 1 à 6 ou des électrodes selon la revendication 7 ou 8.

13. Utilisation de piles électrochimiques selon la revendication 12 en tant que source de courant dans des appareils mobiles.

14. Utilisation de piles électrochimiques selon la revendication 12 ou 13, **caractérisée en ce que** l'appareil mobile est une automobile, un deux-roues, un avion, un ordinateur, un téléphone ou un outil à main électrique.

15. Procédé de fabrication d'électrodes, **caractérisé en ce que**
(A) au moins un composé de formule générale (I)
AₐM_{b}P_{c}O_{d} (I)
dans laquelle les variables sont définies de la manière suivante :
M représente au moins un métal de transition, choisi parmi Co, Ni, Mn, Fe et Cr,
A représente Li ou LiₓNa₁₋ₓ, x étant un nombre dans la plage allant de 0,2 à 1,0,
a représente un nombre dans la plage allant de 3,5 à 4,5,
b représente un nombre dans la plage allant de 0,8 à 1, 2,
c représente un nombre dans la plage allant de 1,8 à 2,2, et
d représente un nombre dans la plage allant de 7,2 à 8, 8,
(B) au moins un matériau carboné électriquement conducteur et
(C) au moins un liant
sont mélangés les uns avec les autres en une ou plusieurs étapes, et éventuellement appliqués sur
(D) au moins un film métallique ou plastique.

16. Composite contenant
(A) au moins un composé de formule générale (I)
AₐM_{b}P_{c}O_{d} (I)
dans laquelle les variables sont définies de la manière suivante :
M représente au moins un métal de transition, choisi parmi Co, Ni, Mn, Fe et Cr,
A représente Li ou LiₓNa₁₋ₓ, x étant un nombre dans la plage allant de 0,2 à 1,0,
a représente un nombre dans la plage allant de 3,5 à 4,5,
b représente un nombre dans la plage allant de 0,8 à 1, 2,
c représente un nombre dans la plage allant de 1,8 à 2,2, et
d représente un nombre dans la plage allant de 7,2 à 8,8, et
(B) au moins un matériau carboné électriquement conducteur.
